# EUROPEAN PATENT APPLICATION

(11) **EP 3 305 580 A1**
(43) Date of publication of application: **11.04.2018**
(21) Application number: 16465545.8
(22) Date of filing: 10.10.2016
(51) Int. Cl.: B60L 11/18, B60P 3/12

(54) **PRIMARY VEHICLE COMPRISING A TRACTION BATTERY AND METHOD FOR CONTROLLING A CHARGING PROCESS OF A TRACTION BATTERY OF A SECONDARY VEHICLE**

(71) Applicant: Continental Automotive GmbH, 30165 Hannover (DE)
(72) Inventor: Miclea, Razvan, 505700 Victoria (RO)

(57) **Abstract**

The invention is concerned with a method for controlling a charging process of a traction battery of a secondary vehicle (17) that is being transported by a primary vehicle (10), wherein by the charging process a charging current is provided by a traction battery (11) of the primary vehicle (10). The invention is also concerned with a corresponding primary vehicle (10) equipped with a traction battery (11), a charging device (13) and a battery management device (14). The invention is characterized in that the battery management device is configured to monitor a state of charge of the traction battery (11) of the primary vehicle (10) and to control the charging process by adjusting (28) an amperage of the charging current.

## Description

The invention is concerned with a method for controlling a charging process of a traction battery of a secondary vehicle that is being transported by a primary vehicle. The charging process comprises charging the traction battery of the secondary vehicle. A charging current for charging the traction battery of the secondary vehicle is provided by a traction battery of the primary vehicle. The invention is also concerned with a primary vehicle comprising such a traction battery and configured for charging the traction battery of a secondary vehicle that is being transported by the primary vehicle.

In the context of the present invention the fact that the secondary vehicle is being transported by the primary vehicle does not imply that the primary vehicle is necessarily actually moving or even being used or operated, although this should certainly be possible. It is sufficient that the secondary vehicle is arranged on or inside the primary vehicle or is attached or mechanically and electrically connected or coupled to the primary vehicle.

Also in the context of the present invention a primary vehicle may for example be a car or a bus but is not limited to these examples. Examples for the secondary vehicle may include unicycles, bicycles, scooters, skateboards, and other such devices, which may also be self-balancing. Preferably the secondary vehicle is a battery-only vehicle, meaning that it has no combustion engine of its own.

DE 10 2014 214 071 A1 discloses a method for charging an electrochemical energy storage device of a secondary means of transportation in a vehicle electrical system, wherein the vehicle electrical system is part of a means of transportation that is powered by a combustion engine. The method comprises predefining a charge state of the electrochemical energy storage device and charging the device using stored energy until the charge state is reached. The energy may for example be stored in the form of fossil fuel. After reaching the charge state the device should automatically be charged mainly using energy recovered through recuperation.

It is an object of the present invention to provide a primary vehicle comprising a traction battery and a method for controlling a charging process of a traction battery of a secondary vehicle, wherein the respective usabilities of the primary and the secondary vehicle are maximized.

The object is achieved by the subject matter of the independent claims. Advantageous developments with convenient and non-trivial further embodiments of the invention are specified in the following description, the dependent claims and the figure.

The invention provides a method for controlling a charging process of a traction battery of a secondary vehicle that is being transported by a primary vehicle, wherein as part of the charging process a charging current for charging the traction battery of the secondary vehicle is provided by a traction battery of the primary vehicle. Since the primary vehicle is a battery electric vehicle (BEV), it is especially advantageous that it comprises a battery management device. A battery electric vehicle is a battery-only electric vehicle or all-electric vehicle using an electric motor or a plurality of electric motors instead of an internal combustion engine for propulsion. As such the traction battery is the main source of energy. Since a capacity of batteries available today for storing energy and thus a travelling range of the primary vehicle is limited, it is necessary to deliberately manage any usage of said stored energy.

The battery management device is designed and arranged to monitor a state of charge (SOC) of the traction battery of the primary vehicle and to control the charging process by adjusting an amperage of the charging current. In other words, the battery management device is directly or indirectly connected to the traction battery through an electric connection and/or through a data link or data connection. The battery management device may be a separate unit but it is also possible that it is part of or integrated with the traction battery or disposed in a common housing with the traction battery or part of the traction battery. It may also be provided that the battery management is connected to the traction battery through a first connection and/or at a first connection point to monitor or track the state of charge. In this case the battery management device may then also be connected to a second connection point of an electrical system of the primary vehicle located between the traction battery and a connection to the secondary vehicle.

The adjustment or adjusting of the charging current is based on the state of charge of the traction battery of the primary vehicle. In other words the charging current or, more specifically, the amperage of the charging current, may be different for different states of charge of the traction battery. Preferably a higher amperage is provided if the state of charge is high and a lower amperage is provided if the state of charge is low. The amperage may be adjusted or adapted continuously corresponding to a continuous change in the state of charge. Alternatively or additionally a level and/or value range or a plurality of levels and/or value ranges of the state of charge may be predefined with the amperage only changing or being adjusted if or when the state of charge crosses a level and/or enters another range of values. In a similar fashion, two or more discrete values for the amperage may be predefined and the amperage may be switched discretely from one value to another instead of being changed continuously or smoothly.

Controlling the charge current in the described fashion in the all-electric primary vehicle advantageously ensures that the secondary vehicle is charged as fast as possible while the state of charge of the traction battery of the primary vehicle is high. Thus a mobility of the primary vehicle or a user of the primary vehicle respectively is not limited severely as would be the case if the traction battery of the primary vehicle would be drained to charge the traction battery of the secondary vehicle. At the same time it is ensured that the secondary vehicle is in a usable, at least partly charged state to provide at least a minimal traveling range even if the secondary vehicle is only transported in the primary vehicle over a relatively short distance and/or for a relatively short duration before being used.

By limiting the amperage of the charging current while the state of charge of the traction battery of the primary vehicle is relatively low, a corresponding strain on said traction battery or a speed of draining said traction battery is also limited. This advantageously ensures, that the user of the primary vehicle does not, for example, unexpectedly find himself in a situation where the energy reserves of the primary vehicle are rapidly being depleted when they are obviously needed for operating the primary vehicle.

For the sake of readability the traction battery of the primary vehicle may be referred to as the primary battery while the traction battery of the secondary battery may be referred to as the secondary battery.

The invention also comprises optional embodiments that provide features which afford additional technical advantages.

In an advantageous embodiment of the invention, the charging process is stopped or halted by the battery management device if or when the state of charge of the primary battery is less than or smaller than or below a predetermined or predefined threshold value. Notably the charging of the secondary battery is stopped regardless of a state of charge of the secondary battery. This is to advantageously ensure that the primary vehicle retains a minimal range. Thus the user of the primary vehicle may store the secondary vehicle for transport by the primary vehicle even when the secondary battery is substantially empty and still have a guaranteed minimum range for driving with the primary vehicle. This obviates the need for providing a possibility for the user to prevent the charging of the secondary battery. Additionally a secondary threshold value for the state of charge of the primary battery may be predefined with this secondary threshold value being bigger or higher than the threshold value for stopping the charging process. If the charging process of the secondary battery has been stopped because the state of charge of the primary battery dropped below the threshold value, the charging process may then only be started again after or when the state of charge of the primary battery reaches the secondary threshold value. This advantageously ensures that a recharging of the primary battery is not unduly hindered or slowed by a presence of the secondary vehicle.

In a further advantageous embodiment of the invention, the primary vehicle comprises an inductive charging device configured to detect if the secondary vehicle is - relative to the charging device - correctly arranged or positioned for charging the secondary battery. The charging process of the secondary battery is started as soon as the charging device detects that the secondary vehicle is correctly positioned in the charging position. It is also possible that the charging process is only started after the correct positioning of the secondary vehicle is successfully detected and a corresponding signal indicating the successful positioning and detection is given or sent from the charging device to the battery management device. The correct positioning of the secondary vehicle may be limited to the correct positioning of the secondary battery and/or an energy receiving device of the secondary vehicle. Other parts, in particular moving or movable parts, of the secondary vehicle not directly related to the charging process may not necessarily need to be positioned in any particular way or arranged in any particular position. The correct positioning of the secondary vehicle is especially important for inductive or wireless charging to ensure safe operation of the charging device and maximum efficiency of the charging process.

In a further advantageous embodiment of the invention, the charging device comprises detecting means for detecting a foreign metal object or a plurality of foreign metal objects in a charging area. The term foreign object should be understood to refer to any object that is not part of the secondary vehicle and/or is not related to or used for the charging process. The term charging area refers to an area at or near, in particular on or above, the charging device, in particular a part of the charging device used for the transmission of energy, where the foreign metal object or its presence may interfere with the charging process in an undesirable and/or unintended way. If any foreign metal object is detected in the charging area, the charging process is stopped and/or prevented from starting or taking place. This may be controlled by the charging device and/or by the battery management device. The charging process is stopped or halted and/or prevented as long as the foreign metal object is being detected and/or present in the charging area. This ensures safe operation of the charging device. The described function of and means for detecting foreign metal objects may be based on corresponding technology available as part of the so called wireless power charging (WPC) technology established by Continental Automotive Systems.

The invention also provides a primary vehicle comprising a traction battery and a battery management device connected to the traction battery, wherein the battery management device is configured to control a charging current flowing from the traction battery of the primary vehicle to a traction battery of a secondary vehicle for charging said traction battery of said secondary vehicle while said secondary vehicle is being transported by the primary vehicle. The battery management device is designed and arranged to monitor a state of charge of the traction battery of the primary vehicle, wherein the battery management device is configured to adjust an amperage of the charging current based on the state of charge of the traction battery of the primary vehicle. The primary vehicle may comprise a charging device through which a connection and/or an energy transfer from the primary vehicle to the secondary vehicle may be established. For this purpose the charging device may, for example, comprise a plug or connector or the charging device may be connected to a plug or connector.

In an advantageous embodiment of the invention, the primary vehicle comprises a trunk area and an inductive charging device arranged in the trunk area of the primary vehicle. By using an inductive charging device, charging the secondary vehicle is made particularly easy for the user. The placement of the charging device in the trunk area, i.e. for example in the trunk itself or adjacent to the trunk, conveniently enabled charging the secondary vehicle in the same existing place or spot that is most convenient and most likely to be used for transporting the secondary vehicle anyway. But, since the trunk is typically also used to transport a variety of other objects, there may exist a danger of damaging a connector or plug intended for connecting the secondary vehicle. Thus the use of an inductive charging device is particularly advantageous since it can be safely covered to prevent any direct contact between any sensitive electric parts and objects being transported in the trunk. The charging device may also be placed in or adjacent to a spare wheel well, since the use of tires that allow the primary vehicle to be driven to a repair shop even when damaged becomes more widespread. Thus a beneficial usage for the no-longer-needed spare wheel well is provided by the invention.

In a further advantageous embodiment of the invention, the primary vehicle comprises an inductive charging device and positioning means for positioning and/or holding or keeping the secondary vehicle in a fixed intended charging position relative to the charging device. When using inductive or wireless charging technology a careful and precise positioning of the battery to be charged in relation to the charging device is important and ensured by the provided positioning means. The positioning means may also be designed to actively guide and/or move the secondary vehicle into the charging position. The positioning means advantageously allow for safe and efficient charging of the secondary battery even when the primary vehicle is moving despite the unavoidable accompanying vibrations or shocks.

Preferably the positioning means comprise at least one elastic and/or flexible and/or movable and fixable part for accommodating a variety of secondary vehicles of different sizes and/or shapes and/or types. This provides the user with an advantageous flexibility and freedom of choice regarding the secondary vehicle.

In a further advantageous embodiment of the invention, the primary vehicle comprises a display unit directly or indirectly connected to the battery management device via a data link or a data connection. The display unit may be configured to, in particular visually, indicate whether the secondary battery is being charged. Additionally or alternatively the display unit may be configured to, in particular visually, indicate a state of charge of the secondary battery. This makes it very convenient and easy for the user to inform himself about a status of the secondary battery without having to, for example, open a trunk lid and manually check a corresponding indicator on the secondary vehicle itself. It may, for example, also advantageously allow the user to choose an optimal route and/or parking spot for the primary vehicle depending on the state of charge and corresponding usability of the secondary vehicle.

It may also possible for the display unit to provide other indications, notifications, alarm signals and the like. The display unit may also be configured to provide acoustic indications and/or send a message to a mobile electronic device. Such a message could notify the user about a status of the primary and/or secondary battery even when the user is not in, at or near the primary vehicle.

The connection or link between the secondary vehicle and the display unit may at least partially be wireless. For example Bluetooth-connection may be used to communicate or transmit data between the secondary vehicle and the display unit.

Any embodiment and/or any corresponding advantages and/or technical effects of the method according to the present invention may analogously transferred to the primary vehicle according to the present invention and vice versa.

In the following an exemplary implementation of the invention is described. The figures show:
- Fig. 1: a schematic illustration of an embodiment of the inventive motor vehicle; and
- Fig. 2: a schematic flow chart illustrating an embodiment of the inventive method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

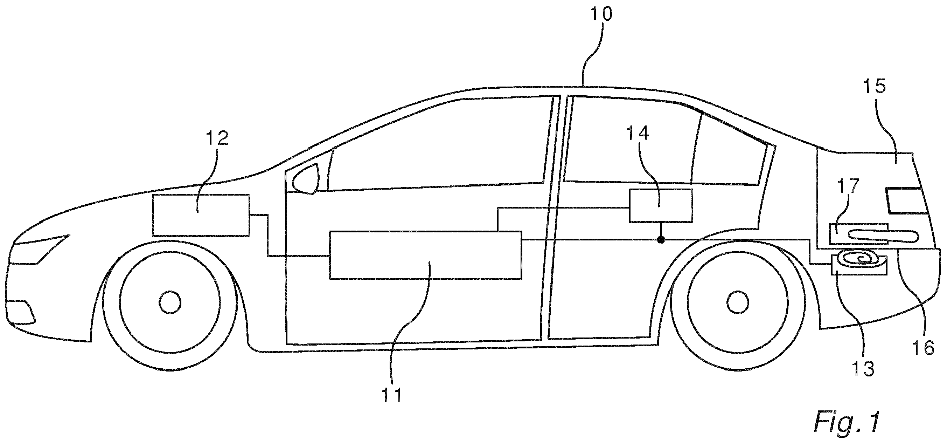

Fig. 1 shows a schematic illustration of a car 10 which constitutes a primary vehicle within the meaning of the present invention. The car 10 is a battery electric vehicle (BEV) and as such comprises a traction battery that is herein referred to as a primary battery 11. Connected to the primary battery 11 is an electric drive motor 12 used for propulsion of the car 10. There may be more than one motor or engine but they would also be connected to and energized or supplied with electric power by the primary battery 11. Other motors or engines of the car 10 not used for propulsion purposes are not a concern of the present invention.

The car 10 also comprises a charging device 13 which is presently located below a trunk 15 of the car 10. More specifically, the charging device 13 is arranged below or adjacent a trunk floor 16 and uses inductive technology to transfer energy though the use of electromagnetic fields with the need of any direct physical contact between the charging device and any device or battery being charged by it. In this case, the trunk floor 16 covers and protects the charging device 13 but is designed to allow the electromagnetic fields used by the charging device 13 to pass through. The charging device 13 is connected to the primary battery 11 which provides electric energy, current and power to the charging device 13 for transmitting or transferring to a device or battery to be charged.

Also connected to the primary battery 11 as part of the car 10 is a battery management device 14. The battery management device 14 presently is designed and arranged serve two main functions. The first function of the battery management device 14 is to monitor or track a state of charge (SOC) of the primary battery 11. The second function of the battery management device 14 is to control, regulate, adjust or set a charging current provided by the primary battery 11 to the charging device 13.

Commonly, vehicle trunks are designed with special or dedicated places or compartments to hold, for example, a spare wheel and/or a tool kit. With advances in technology and service these types of equipment can become increasingly dispensable. For example, the need to carry a spare wheel may be obviated by special run-flat tires or tire repair kits which takes up significantly less space than a spare wheel.

At the same time, individual traffic is increasing. Since cities in particular are becoming more crowded with traffic and/or outright ban cars in their respective centers, it is not always possible to find a parking spot for the car 10 near a desired location. One option to supplement individual transport in these situations is through the use of relatively small personal transportation or mobility devices.

Presently such a device is placed in the trunk 15 in the form of a secondary vehicle 17 that can transported by the car 10 but can then be taken out of the trunk 15 and used for personal transportation separately from the car 10. The secondary vehicle 17 comprises a traction battery that is herein referred to as a secondary battery. It is to be understood, however, that this designation is only meant to underline that the secondary battery is part of the secondary vehicle 17. Even though it is therefore called secondary battery, it nevertheless constitutes a main traction battery of the secondary vehicle 17 used for propulsion of said secondary vehicle 17.

The secondary vehicle 17 is presently arranged on the trunk floor 16 opposite of the charging device 13. This is a charging position in which the secondary battery may be inductively charged by or via the charging device 13. Additionally or alternatively the car 10 may comprise a connector or plug designed to connect to the secondary vehicle 17 to establish a wired charging connection.

To hold the secondary vehicle 17 in the charging position, the car 10 preferably comprises positioning means. These positioning means can for example comprise adjustable, movable, flexible and/or elastic parts designed to clamp or lock the secondary vehicle in place. The positioning means can also be fixable in different positions. The positioning means safely and securely hold the secondary vehicle 17 in the charging position even while the car 10 is moving. Preferably the positioning means can accommodate different sizes, shapes and/or types of secondary vehicles 17. Examples for different secondary vehicles 17 include electric skateboard (hoverboards), scooters, self-balancing scooter devices, bicycles, and unicycles.

Since battery electric vehicles are becoming more widespread, the all-electric car 10 is designed to take the necessarily limited energy storage capacity of the primary battery 11 into account when charging the traction battery of the secondary vehicle 17. With this in mind, the battery management device 14 is designed to control and adjust the charging current used to charge the secondary battery based on or as a function of or in dependence on the state of charge of the primary battery 11. The battery autonomy of the secondary vehicle 17 is typically limited but the secondary battery can still hold a considerably more energy than for example a battery of a mobile phone or computer which might conventionally be charged from the primary battery 11. Thus charging the secondary battery with energy provided by the primary battery 11 can have a significant impact on the state of charge of the primary battery 11 and therefore on a remaining range of the car 10. This makes managing the charging process of the secondary battery especially important in all-electric primary vehicles like the car 10.

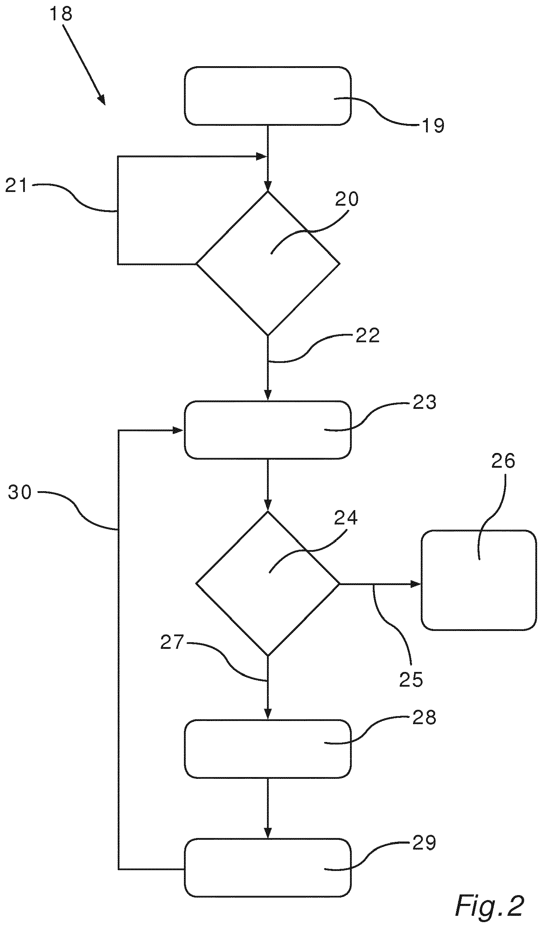

Fig. 2 shows a basic schematic flow chart 18 illustrating a process of charging the secondary battery from the primary battery 11. At a start 19 of the process the placement or presence of the secondary vehicle 17 in the trunk 15 and, more specifically, on the trunk floor 16 in range of the charging device 13 is detected by the charging device 13. Next a positional check 20 is performed to verify that the secondary vehicle is properly located in the intended charging position since a correct alignment of the secondary vehicle 17 relative to the charging device 13 is necessary for the inductive charging. If it is determined that the secondary vehicle 17 is not positioned correctly the positional check 20 is repeated in a loop 21. A misalignment may preferably be indicated visually and or acoustically to a user. If, instead of the inductive charging device 13 a simple wired connection is used to couple the secondary vehicle 17 to the car 10, the positional check can obviously be omitted.

If it is determined that the secondary vehicle 17 is aligned correctly in the charging position a path 22 is followed and a check 23 of the state of charge of the primary battery 11 is performed. If a comparison 24 between the determined state of charge and a predefined threshold value indicated that the state of charge is less than the threshold value, a path 25 is followed that lead to a stop 26 of the process. In other words, the secondary vehicle is not charged, if the state of charge of the primary battery 11 is not deemed sufficient.

If, on the other hand, the state of charge is higher than or above the threshold value, the process follows a path 27 and an adjustment 28 of the charging current is performed based on the current state of charge determined through the check 23. The adjustment 28 or setting of the charging current or, more specifically, an amperage of the charging current, may also include or be based on a state of charge of the secondary battery. For example, the charging current can be set to zero and the process can be stopped, if the secondary battery is already fully charged at this point. Otherwise the charging 29 of the secondary battery is initiated or continued using the set or adjusted charging current.

During the charging 29 of the secondary battery the state of charge of the primary battery may be continually monitored, which is indicated by a loop 30. This means that after each check of the state of charge, the charging current is adjusted accordingly. The monitoring of the state of charge and therefore the adjustment 28 of the charging current may be performed continuously or, for example, in predetermined time intervals.

Parallel to all or some of the illustrated steps a check for foreign metal objects on the trunk floor 16 opposite the charging device 13 may continuously performed. If a foreign metal object is detected in a charging area, a charging or an energy transfer through the charging device 13 is blocked or prevented or - if the charging was already in progress - stopped until the foreign metal object is removed from the charging area.

It is also possible that the trunk floor 16 has a hole or opening for a special charging plate of the charging device 13. In this case the charging plate would be exposed to the volume of the trunk 15. The charging process might then be stopped, if a foreign metal object is detected on the charging plate.

Additionally the car 10 may comprise a display unit which could for example be mounted on a dashboard of the car 10. It is also possible to use an existing instrument cluster of the vehicle for the display unit. Parallel to all or some of the steps illustrated in Fig. 2 a state of charge of the secondary battery and/or a charging status - showing whether the secondary battery is being charged or not - may then be indicated using the display unit.

It is to be understood that the flow chart 18 is purely exemplary and at least some of the illustrated steps may be performed in a different order without leaving the scope of the present invention. For example, the check 23 of the state of charge may just as well be performed even before the positional check 20. Also the positional check 20 may be continuously performed and the charging device may be de-energized if at any point it is detected that the secondary vehicle is not or is no longer correctly positioned in the charging position.

Overall, the example shows how a traction battery of a secondary vehicle that is being transported in or by a primary vehicle can be safely and securely charged while taking into account a limited energy budget of an all-electric primary vehicle.

## Claims

1. Method for controlling a charging process of a traction battery of a secondary vehicle (17) that is being transported by a primary vehicle (10), wherein by the charging process a charging current for charging the traction battery of the secondary vehicle (17) is provided by a traction battery (11) of the primary vehicle (10),
**characterized in that**
the primary vehicle (10) is a battery electric vehicle comprising a battery management device (14) that is designed and arranged to monitor a state of charge of the traction battery (11) of the primary vehicle (10), wherein the battery management device (14) controls the charging process by adjusting (28) an amperage of the charging current based on the state of charge of the traction battery (11) of the primary vehicle (10).

2. Method according to claim 1, wherein the charging process is stopped (26) by the battery management device (14) when the state of charge of the traction battery (11) of the primary vehicle (10) is less than a predetermined threshold value.

3. Method according to any of the preceding claims, wherein
- the primary vehicle (10) comprises an inductive charging device (13) configured to detect if the secondary vehicle (17) is correctly arranged in a charging position for charging the traction battery of the secondary vehicle (17), and
- the charging process is started (19) as soon as the charging device (13) detects that the secondary vehicle (17) is correctly positioned in the charging position.

4. Method according to claim 3, wherein
- the charging device (13) comprises detecting means for detecting a foreign metal object in a charging area and
- the charging process is stopped and/or prevented by the charging device (13) and/or by the battery management device (14) as long as the foreign metal object is present in the charging area.

5. Primary vehicle (10) comprising a traction battery (11) and a battery management device (14) connected to the traction battery (11), wherein the battery management device (14) is configured to control a charging current flowing from the traction battery (11) of the primary vehicle (10) to a traction battery of a secondary vehicle (17) for charging said traction battery of said secondary vehicle (17) while said secondary vehicle (17) is being transported by the primary vehicle (10),
**characterized in that**
the battery management device (14) is designed and arranged to monitor a state of charge of the traction battery (11) of the primary vehicle (10), wherein the battery management device (14) is configured to adjust an amperage of the charging current based on the state of charge of the traction battery (11) of the primary vehicle (10).

6. Primary vehicle (10) according to claim 5, wherein the primary vehicle (10) comprises a trunk area (15) and an inductive charging device (13) arranged in the trunk area (15) of the primary vehicle (10).

7. Primary vehicle (10) according to claim 5 or 6, wherein the primary vehicle (10) comprises an inductive charging device (13) and positioning means for positioning and/or holding the secondary vehicle (17) in a fixed intended charging position relative to the charging device (13).

8. Primary vehicle (10) according to claim 7, wherein the positioning means comprise at least one elastic and/or flexible and/or movable and fixable part for accommodating secondary vehicles (17) of different sizes and/or shapes.

9. Primary vehicle (10) according to any of the claims 5 to 8 comprising a display unit connected to the battery management device (14), wherein the display unit
- is configured to indicate whether the traction battery of the secondary vehicle (17) is being charged and/or
- is configured to indicate a state of charge of the traction battery of the secondary vehicle (17).
